Europäisches Patentamt

European Patent Office

Office européen des brevets

(11) Veröffentlichungsnummer: **0 264 907**
A2

## (12) EUROPÄISCHE PATENTANMELDUNG

(21) Anmeldenummer: 87115339.1

(22) Anmeldetag: 20.10.87

(51) Int. Cl.4: **F24H 1/44** , F24H 1/38

(30) Priorität: 21.10.86 AT 2791/86

(43) Veröffentlichungstag der Anmeldung:
27.04.88 Patentblatt 88/17

(84) Benannte Vertragsstaaten:
AT BE CH DE ES FR GB IT LI NL SE

(71) Anmelder: **Geisler, Josef**
**Hainzenberg 85c**
**A-6283 Hippach(AT)**

(72) Erfinder: **Geisler, Josef**
**Hainzenberg 85c**
**A-6283 Hippach(AT)**

(74) Vertreter: **Torggler, Paul, Dr. et al**
**Wilhelm-Greil-Strasse 16**
**A-6020 Innsbruck(AT)**

(54) **Heizkessel für flüssige Brennstoffe.**

(57) Ein Heizkessel für flüssige Brennstoffe mit einem den Brennraum (1) umgebenden, zum Teil wassergefüllten Doppelmantel (2), der Austrittsöffnungen (4) aufweist, die den Durchlaß von Wasserdampf zum Brennraum (1) oder in ein Steigrohr (5) ermöglichen. Dieser Wasserdampf vermischt sich mit den Rauchgasen. Der eigentliche der Heizung dienende Wärmetauscher (10) ist um das Steigrohr (5) angeordnet. Nachdem das Dampf-Brenngasgemisch den Wärmetauscher (10) durchlaufen hat, wird der kondensierte Dampf in einem Sammelbehälter (16) aufgefangen und zurück zum Doppelmantel (2) geführt.

Fig. 2

EP 0 264 907 A2

Die Erfindung bezieht sich auf einen Heizkessel für flüssige Brennstoffe mit einem Brennraum mit Brenner, einem Abzug für die Rauchgase und einem im Bereich dieses Abzuges befindlichen Wärmetauscher.

Der Energiegehalt von Brennstoffen wird durch den Wärmewert angegeben. Dabei unterscheidet man zwischen dem Brennwert und dem Heizwert. Der Brennwert eines Brennstoffes ist diejenige Wärmemenge, die bei vollständiger Verbrennung des Brennstoffes frei wird, wenn die Anfangs-und Endprodukte die gleiche Temperatur aufweisen und der bei der Verbrennung entstandene Wasserdampf in flüssiger Form vorliegt.

Gemäß gängiger Definition ist der Heizwert eines Brennstoffes jene Wärmemenge, die bei vollständiger Verbrennung frei wird, wenn das bei der Verbrennung entstandene Wasser dampfförmig vorhanden ist. Der chemisch gebundene oder molekular vorhandene Wasserstoffgehalt des Brennstoffes bestimmt somit das Verhältnis des Brennwertes zum Heizwert. Je höher der Wasserstoffanteil ist, umso größer wird das Verhältnis Brennwert : Heizwert.

Beispielsweise beträgt der Brennwert von Stadtgas 5,48 kWh/m³, während der Heizwert 4,87 kWh/m³ beträgt. Das Verhältnis von Brennwert : Heizwert ist daher 1 : 1,13.

Der Brennwert von Heizöl Extraleicht beträgt 12,57 kWh/kg und der Heizwert 11,86 kWh/kg. Es ergibt sich somit ein Verhältnis von 1,06.

Der Brennwert von Heizöl Leicht beträgt 12,42 kWh/kg.

Der Heizwert von Heizöl Leicht beträgt 11,58 = Verhältnis von 1,07.

Setzt man den Heizwert eines Brennstoffes mit 100 % an, so erhält man einen höheren Wirkungsgrad, wenn der Brennwert genützt wird. Um die vorhandenen Brennstoffe besser ausnützen zu können und einen besseren Wirkungsgrad bei der Heizung zu erzielen, sind daher sogenannte Brennwertkessel konstruiert worden.

Während die Verbrennung von gasförmigen Brennstoffen im Brennwertverfahren befriedigend erfolgt, ergeben sich Schwierigkeiten beim Verbrennen von flüssigen Brennstoffen.

Die bisher bekannten Brennwertkessel haben bei Ölbetrieb den Nachteil, daß in der Zone, in der die Kondensation der Heizgase erfolgt, die Heizflächen verkleben und dadurch nicht nur die Wärmeübertragung beeinträchtigt wird, sondern auch die Zug-bzw. Druckverhältnisse im Feuerraum sehr stark schwanken. Dies bewirkt, daß die Brennereinstellung laufend geändert bzw. das Gerät oft gereinigt werden muß.

Um hier Abhilfe zu schaffen, sind Brennwertheizanlagen geschaffen worden, bei denen der Wärmetauscher dem eigentlichen Heizkessel nachgeschaltet ist und bei denen das Abgas und die Heizflächen mit Wasser berieselt werden. Jedoch auch mit dieser Konstruktion konnten die eingangs erwähnten Nachteile nicht vollständig behoben werden.

Aufgabe der vorliegenden Erfindung ist es, einen Heizkessel für flüssige Brennstoffe zu schaffen, der im Brennwertverfahren betrieben werden kann und bei dem sich die Heizflächen selbst reinigen.

Dies wird erfindungsgemäß durch einen vom Wärmetauscher unabhängigen Wasserbehälter, von dem Dampf in den Heizkessel abgegeben wird und durch eine Kondensatauffangeinrichtung, die den kondensierten Dampf wieder dem Wasserbehälter zuführt, nachdem er zusammen mit den Rauchgasen den Wärmetauscher passiert bzw. durchlaufen hat.

Der Wasserbehälter wird vorteilhaft von einem den Brennraum umgebenden Doppelmantel gebildet.

Durch die erfindungsgemäße Ausführung des Heizkessels weist dieser zwei Wasserkreisläufe auf, davon der erste der Dampferzeugung dient und der zweite, der durch den Wärmetauscher geführt wird, im herkömmlichen Sinne der Heizwassererzeugung.

Ein Ausführungsbeispiel der Erfindung ist durch ein oberhalb des Wärmetauschers austretendes Steigrohr für die Rauchgase, das den Wärmetauscher umgibt und welches vom Brennraum wegführt und das einen Doppelmantel aufweist, der an den Wasserbehälter angeschlossen und oben mit einer Austrittsöffnung für den Wasserdampf versehen ist, gekennzeichnet.

Dadurch, daß die Rauchgase und der Wasserdampf an der obersten Stelle des Heizkessels zusammentreffen, kann in vielen Fällen auf einen Ventilator im Steigrohr verzichtet werden.

In diesem Zusammenhang ist darauf hinzuweisen, daß obwohl gemäß den nachfolgend beschriebenen Ausführungsbeispielen der Wärmetauscher und der den eigentlichen Brennraum umgebende Wassermantel räumlich getrennte Teile sind, die jedoch gemeinsam den Heizkessel bilden.

Ein Ausführungsbeispiel der Erfindung sieht vor, daß der Brennraum horizontal ausgerichtet ist, und daß das gegenüber dem Brenner angeordnete Steigrohr mit seinem unteren Ende bis etwa auf die Höhe des Brenners reicht.

Vorteilhaft ist, daß der Doppelmantel des Steigrohres mit zwei in der Höhe versetzten Anschlüssen an dem Wasserbehälter versehen ist.

Ein weiteres Ausführungsbeispiel der Erfindung sieht vor, daß die Kondensatauffangeinrichtung einen Sammelbehälter umfaßt, der mittels eines Rohres mit dem Wasserbehälter verbunden ist, wobei beim Einlaß zum Wasserbehälter ein Rückflußverhinderer vorgesehen ist.

Um die Dampfbildung in dem das Steigrohr umgebenden Doppelmantel zu verbessern, ist vorteilhaft vorgesehen, daß das Steigrohr und der Dampf führende Doppelmantel im Bereich des Wärmetauschers mit einer Isolierung, beispielsweise einem Luftmantel umgeben ist.

In einem weiteren Ausführungsbeispiel der Erfindung ist vorgesehen, daß der Wasserbehälter Wasserdampf direkt in den Brennraum abgibt.

Die Abgabe von Wasserdampf erfolgt dabei beispielsweise über Austrittsöffnungen, die in einer oder mehreren Lochreihen bei der oberen Abdeckung des Brennraumes angeordnet sind.

Die Austrittsöffnungen können auch Schlitze sein.

Ein Ausführungsbeispiel der Erfindung sieht mindestens ein in den Brennraum ragendes, horizontales Abdeckblech für die Rauchgase vor. Die Abdeckbleche sind vorteilhaft doppel wandig ausgeführt. Ein Verformen des Abdeckbleches wird dadurch verhindert.

Das Abgas und der erzeugte Wasserdampf werden durch den Wärmetauscher geführt. Durch die Abkühlung des Abgases kondensiert der darin befindliche Wasserdampf, der in einem Ausgleichsbehälter aufgefangen wird und anschließend in den Verdampfer zurückfließt. Der Kondensatstand wird dadurch geregelt, daß der sich im Ausgleichsbehälter befindliche, in der Höhe verstellbare Überlauf zwangsweise die Höhe des Kondensatstandes im Verdampfer bestimmt.

Ein Ausführungsbeispiel der Erfindung sieht vor, daß im Sammelbehälter ein Siphon ausgebildet ist.

Vorteilhaft ist vorgesehen, daß vom Sammelbehälter ein höhenverstellbarer Kondensatüberlauf wegführt. Die Einstellung des Kondensatüberlaufes bestimmt die Höhe des Wasserspiegels im Sammelbehälter und zugleich im Verdampfer.

Nachfolgend werden zwei Ausführungsbeispiele der Erfindung anhand der Figuren der beiliegenden Zeichnungen eingehend beschrieben, ohne daß die Erfindung darauf eingeschränkt sein soll.

Die Figuren der Zeichnungen zeigen je einen - schematischen Schnitt durch einen erfindungsgemäßen Heizkessel.

Der erfindungsgemäße Heizkessel weist einen Kesselraum 1 auf, in den ein Brenner 3 ragt. Der Brenner 3 ist horizontal ausgerichtet.

Der Heizkessel weist einen zum Teil wassergefüllten Doppelmantel 2 auf, der den Brennraum 1 umgibt.

Die Rauchgase gelangen aus dem Brennraum 1 in ein Steig rohr 5, durchlaufen den Wärmetauscher 10 und gelangen schließlich über ein Sammelrohr 14 für das Kondensat in das Abzugsrohr 17, das den Kaminanschluß bildet.

Die grundsätzlichen Bauelemente des Heizkessels, der Doppelmantel 2, der den Brennraum 1 umgibt, das Steigrohr 5 und der Wärmetauscher 10 sowie das Sammelrohr 14 und ein Sammelbehälter 16 für das Kondensat sind in beiden Ausführungsbeispielen gleich. Die Ausführungsbeispiele unterscheiden sich jedoch durch diverse konstruktive Änderungen.

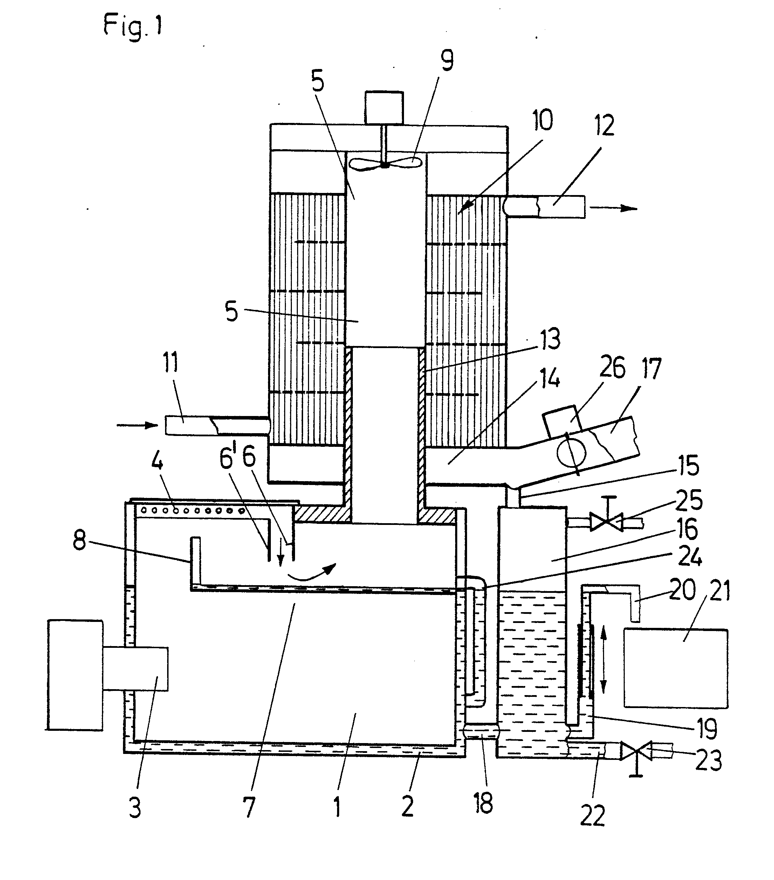

Nachfolgend wird das Ausführungsbeispiel der Fig. 1 beschrieben.

In diesem Ausführungsbeispiel ist der Doppelmantel 2 an der Innenseite oben mit Austrittsöffnungen 4 versehen, über die Wasserdampf in den Brennraum 2 abgegeben werden kann.

Um zu verhindern, daß der Wasserdampf gleich in das Steigrohr 5 abgezogen wird, sind zwei Ablenkbleche 6, 6' vorgesehen. Die Pfeile zeigen die hauptsächliche Dampfströmung.

Im Brennraum 1 befindet sich ein horizontales Ablenkblech 7, das am Ende, das dem Brenner 3 zugewandt ist, einen nach oben weisenden Steg 8 aufweist. Durch das Ablenkblech 7 sind die Abgase gezwungen, den mit Pfeilen eingezeichneten Weg zu nehmen, um zum Steigrohr 5 zu gelangen. Das Ablenkblech 7 und der Steg 8 sind im Ausführungsbeispiel als Doppelmantel ausgeführt.

Das Ablenkblech 7 und der Steg 8 bilden eine Tasse, in welcher übergekochtes Wasser aufgefangen und durch die Überlaufleitung 24 in den Doppelmantel 2 zurückgeführt wird.

Am oberen Ende des Steigrohres 5 ist ein Ventilator 9 angeordnet. Das Steigrohr 5 ist von einem Wärmetauscher 10 umgeben. Die Abgase werden vom Ventilator 9 angesaugt und dann von oben nach unten durch den Wärmetauscher 10 geführt. Die Drehzahl des Ventilators 9 oder der Öffnungswinkel der Klappe 26 ist auf herkömmliche Weise regelbar.

Der Wärmetauscher 10 ist in herkömmlicher Weise mit einem Einlaß 11 und einem Auslaß 12 versehen. Der Einlaß 11 befindet sich unten, während der Auslaß 12 oben ist.

Im unteren Bereich des Abzugkanales 5 ist dieser mit einer Isolierung 13 versehen, die eine direkte Wärmeabgabe an den Wärmetauscher 10 in diesem Bereich verhindert.

Die abgekühlten Abgase gelangen in das Sammelrohr 14, wobei der darin enthaltene Wasserdampf durch die Abkühlung kondensiert.

Das Kondensat wird über eine Leitung 15 einem Sammelbehälter 16 zugeführt.

Die Abgase können über einen Kaminanschluß 17 nach außen entweichen.

Der Sammelbehälter 16 ist über eine Leitung 18 mit dem Doppelmantel 2, der den Brennraum umgibt, verbunden und weist eine Abflußleitung 19 auf, die überflüssiges Kondensat abgibt. Der wird durch den verstellbaren Überlauf 20, der zu einer Neutralisationsstation 21 führt, geregelt.

Pro Kilogramm verbranntes Heizöl erhält man je nach Rücklauftemperatur bis 0,7 Liter Kondensat, dessen ph-Wert je nach Schwefelgehalt des Heizöls 2,4 betragen kann. In der Neutralisationsstation 21 wird der ph-Wert auf 7 angehoben, bevor das überflüssige Kondensat in das Abwasser abgegeben wird.

Im Sammelbehälter 16 ist ein Siphon angeordnet. Weiters weist der Sammelbehälter 16 eine Ablaßleitung 22 auf, die durch ein Ventil 23 verschlossen ist. Das Einlaßventil 25 dient der Füllung.

Die Überlaufleitung 24 führt übergekochtes Wasser in den Doppelmantel 2 zurück. Der Einlaß der Überlaufleitung ist im Ausführungsbeispiel 3 mm oberhalb des Ablenkbleches 7.

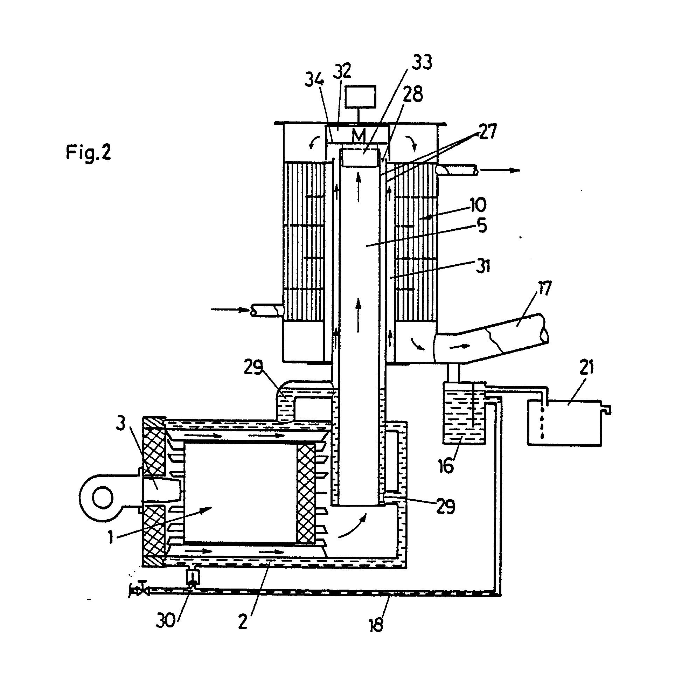

Im Ausführungsbeispiel nach der Fig. 2 mündet das Steigrohr 5 nicht von oben in den Brennraum 1, sondern ist seitlich an diesem vorbei bis etwa auf die Höhe des Brenners 3 geführt. Die Rauchgase gelangen in der Richtung der Pfeile aus dem Brennraum 1 in das Steigrohr 5.

In diesem Ausführungsbeispiel ist das Steigrohr 5 mit einem Doppelmantel 27 umgeben, der über Anschlußleitungen 29 mit dem Doppelmantel 2, der den Brennraum 1 umgibt, verbunden ist.

Der Doppelmantel 27 weist oben eine Öffnung 28 auf. Das von den Heizgasen erhitzte Wasser wird im Doppelmantel 27 zu Dampf, der bei der Öffnung 28 austritt und sich an der mit M bezeichneten Stelle mit den Rauchgasen vermischt.

Um die Dampfbildung zu verbessern, ist der Doppelmantel 27 im Bereich des Wärmetauschers 10 mit einer Isolierung versehen, die sich jedoch über die gesamte Höhe des Wärmetauschers 10 erstreckt.

Im Ausführungsbeispiel wird die Isolierung von einem Luftmantel 31 gebildet. Es könnte jedoch auch im Ausführungsbeispiel nach der Fig. 1 ein Isoliermaterial 13 vorgesehen sein.

Am oberen Ende des Steigrohres 5 ist ein Ventilator 32 angeordnet, der radial über das Steigrohr 5 hinausragt. Das Steigrohr 5 ist vorzugsweise mit einer Muffe 33 mit einem Rand 34 versehen. Durch mehr oder weniger herausziehen der Muffe 33 kann reguliert werden, ob der Ventilator 32 mehr Dampf oder Rauchgas auszieht.

Wie im zuvor beschriebenen Ausführungsbeispiel sammelt sich das Kondensat im Sammelrohr 14, während die Rauchgase über den Kaminanschluß 17 austreten. Das Kondensat gelangt in den Sammelbehälter 16 und wird von dort teilweise über die Leitung 18 zum Doppelmantel 2 zurückgeführt.

Das überschüssige Kondensat gelangt wie beim zuvor beschriebenen Ausführungsbeispiel in die Neutralisationsstation 21 und von dort ins Abwasser.

Beim Übertritt von der Leitung zum Doppelmantel 2 ist noch ein Rückflußventil 30 angeordnet.

## Ansprüche

1. Heizkessel für flüssige Brennstoffe mit einem Brennraum mit Brenner, einem Abzug für die Rauchgase und einem im Bereich dieses Abzuges befindlichen Wärmetauscher, gekennzeichnet durch einen vom Wärmetauscher (10) unabhängigen Wasserbehälter, von dem Dampf in den Heizkessel abgegeben wird und durch eine Kondensatauffangeinrichtung, die den kondensierten Dampf wieder dem Wasserbehälter zuführt, nachdem er zusammen mit den Rauchgasen den Wärmetauscher (10) passiert bzw. durchlaufen hat.

2. Heizkessel nach Anspruch 1, dadurch gekennzeichnet, daß der Wasserbehälter als den Brennraum (1) umgebender Doppelmantel (2) ausgeführt ist.

3. Heizkessel nach Anspruch 1, gekennzeichnet durch ein oberhalb des Wärmetauschers (10) austretendes Steigrohr (5) für die Rauchgase, das den Wärmetauscher (10) umgibt und welches vom Brennraum (1) wegführt und das einen Doppelmantel (27) aufweist, der an den Wasserbehälter angeschlossen und oben mit einer Austrittsöffnung (28) für den Wasserdampf versehen ist.

4. Heizkessel nach Anspruch 3, dadurch gekennzeichnet, daß der Brennraum (1) horizontal ausgerichtet ist, und daß das gegenüber dem Brenner (3) angeordnete Steigrohr (5) mit seinem unteren Ende bis etwa auf die Höhe des Brenners (3) reicht.

5. Heizkessel nach Anspruch 3, dadurch gekennzeichnet, daß der Doppelmantel (27) des Steigrohres mit zwei in der Höhe versetzten Anschlüssen (29) an dem Wasserbehälter versehen ist.

6. Heizkessel nach Anspruch 6, dadurch gekennzeichnet, daß die Kondensatauffangeinrichtung einen Sammelbehälter (16) umfaßt, der mittels eines Rohres (18) mit dem Wasserbehälter verbunden ist, wobei beim Einlaß zum Wasserbehälter ein Rückflußverhinderer (30) vorgesehen ist.

7. Heizkessel nach Anspruch 1, dadurch gekennzeichnet, daß das Steigrohr (5) und der Dampf führende Doppelmantel (27) im Bereich des Wärmetauschers (10) mit einer Isolierung, beispielsweise einem Luftmantel (31) umgeben ist.

8. Heizkessel nach Anspruch 1, dadurch gekennzeichnet, daß der Wasserbehälter Wasserdampf in den Brennraum (1) abgibt.

9. Heizkessel nach Anspruch 2, dadurch gekennzeichnet, daß der Doppelmantel (2) des Wasserbehälters im oberen Bereich Austrittsöffnungen (4) aufweist, die den Durchlaß von Wasserdampf zum Brennraum (1) ermöglichen.

10. Heizkessel nach Anspruch 9, dadurch gekennzeichnet, daß die Austrittsöffnungen (4) in einer oder mehreren Lochreihen bei der oberen Abdeckung des Brennraumes (1) angeordnet sind.

11. Heizkessel nach Anspruch 9, gekennzeichnet durch ein in den Brennraum ragendes, horizontales Ablenkblech (7) für die Rauchgase, wobei der Durchlaß für die Rauchgase bei der Seite des Brennraumes (1) ist, wo sich der Brenner (3) befindet.

12. Heizkessel nach den Ansprüchen 10 und 11, dadurch gekennzeichnet, daß sich am freien Rand des Ablenkbleches (7) ein zu den Lochreihen der Austrittsöffnungen (4) weisender Steg (8) angeordnet ist.

13. Heizkessel nach Anspruch 10, dadurch gekennzeichnet, daß sich an einem Ende der Lochreihen mindestens ein nach unten weisendes Ablenkblech (6, 6') befindet.

14. Heizkessel nach Anspruch 1, dadurch gekennzeichnet, daß der Wärmetauscher (10) ein zentrales Steigrohr (5) umgibt, mit einem unteren Sammelrohr (14) für die Rauchgase, das mit einer Abflußleitung (15) für Kondenswasser verbunden ist, die zu einem Sammelbehälter (16) führt.

15. Heizkessel nach Anspruch 14, dadurch gekennzeichnet, daß sich im zentralen Steigrohr (5), vorzugsweise am oberen Ende, ein Ventilator (9) befindet.

16. Heizkessel nach Anspruch 6, dadurch gekennzeichnet, daß der Sammelbehälter (16) mit einer Leitung (18), die zum Wasserbehälter führt, und mit einer Abflußleitung (19) verbunden ist.

17. Heizkessel nach Anspruch 6 oder 14, dadurch gekennzeichnet, daß im Sammelbehälter (16) ein Siphon ausgebildet ist.

18. Heizkessel nach Anspruch 6 oder 14, dadurch gekennzeichnet, daß vom Sammelbehälter (16) ein höhenverstellbarer Kondensatüberlauf (20) wegführt.

19. Heizkessel nach Anspruch 11, gekennzeichnet durch eine Überlaufleitung (24), die in den Doppelmantel (2) führt und deren Einlaß sich beim Ablenkblech (7) befindet.

Fig. 1

Fig.2